# EUROPÄISCHE PATENTANMELDUNG

(11) **EP 0 701 087 A1**
(43) Veröffentlichungstag der Anmeldung: **13.03.1996**
(21) Anmeldenummer: 95113464.2
(22) Anmeldetag: 28.08.1995
(51) Int. Cl.: F16L 59/18

(54) **Heissgasleitung mit Kondensator**

(30) Priorität: 08.09.1994 DE 4431954
(71) Anmelder: METALLGESELLSCHAFT AG, D-60323 Frankfurt am Main (DE)
(72) Erfinder: Roell, Werner, D-63579 Freigericht (DE)

(57) **Zusammenfassung**

Die Heißgasleitung besitzt ein äußeres Mantelrohr (17), ein inneres, in Abschnitte unterteiltes Schutzrohr (20 bis 24) und zwischen dem Schutzrohr und dem Mantelrohr eine Schutzschicht aus thermisch isolierender Schutzmasse (18). Mindestens ein Abschnitt des Schutzrohrs weist einen als Metallbalg ausgebildeten Kompensator (28) auf, der die Längenänderung des Schutzrohr-Abschnittes aufnimmt.

## Beschreibung

Die Erfindung betrifft eine Heißgasleitung zum Ableiten eines Wasserstoff und Kohlenmonoxid enthaltenden Produktgases, das aus der Umsetzung gasförmiger, flüssiger oder fester Brennstoffe stammt und Temperaturen im Bereich von 600 bis 1500°C aufweist, wobei die Heißgasleitung ein äußeres Mantelrohr, ein inneres, in Abschnitte unterteiltes Schutzrohr und zwischen dem Schutzrohr und dem Mantelrohr eine Schutzschicht aus thermisch isolierender Schutzmasse aufweist.

Produktgase, die durch Heißgasleitungen dieser Art geführt werden, sind z.B. rohe Synthesegase. Diese Gase können z.B. durch die Spaltung von Erdgas, durch die Vergasung flüssiger Kohlenwasserstoffe oder durch die Kohlevergasung gewonnen werden. Geeignete Verfahren und Reaktoren hierfür sind in Ullmanns Encyclopedia of Industrial Chemistry, 5. Auflage, Band A12, S. 192-208, beschrieben. Hierzu gehört u.a. auch der Röhrenofen, von welchem Einzelheiten aus DE-A-43 27 176 bekannt sind.

Die das H₂ und CO enthaltende heiße Produktgas führende Heißgasleitung weist ein in Abschnitte unterteiltes Schutzrohr auf, damit die Längenänderungen des Schutzrohres aufgrund von Temperaturänderungen ungehindert verlaufen können und nicht zu Verbiegungen oder zur Zerstörung des Schutzrohrs führen. Das Schutzrohr kann deshalb nicht völlig gasdicht ausgebildet werden, es muß vielmehr eine Stoßfuge zwischen zwei Rohrabschnitten erhalten bleiben, damit sich die Rohrabschnitte bei Temperaturerhöhung verlängern können.

Es hat sich gezeigt, daß durch die Stoßfugen kleine Seitenströme des heißen Gases nach außen durch die Schutzmasse hindurch ständig bis zur Innenseite des Mantelrohres vordringen können, was bei längerer Betriebszeit zu unerwünschten erhitzten Stellen (hot spots) am Mantelrohr führt. Ferner greift das Kohlenmonoxid das üblicherweise aus Stahl gefertigte Mantelrohr an und führt durch Carbidbildung (metal dusting) zur Schwächung des Rohrs und evtl. zu dessen Zerstörung.

Der Erfindung liegt deshalb die Aufgabe zugrunde, die eingangs genannte Heißgasleitung so auszubilden, daß das Schutzrohr möglichst gasdicht ausgebildet werden kann, wobei Längenänderungen unproblematisch sind. Erfindungsgemäß gelingt dies dadurch, daß mindestens ein Abschnitt des Schutzrohrs einen als Metallbalg ausgebildeten Kompensator aufweist, der die Längenänderung des Schutzrohr-Abschnitts aufnimmt.

Eine Ausgestaltung der Erfindung besteht darin, daß der mit einem Kompensator versehene Schutzrohr-Abschnitt durch mindestens eine ringförmige Verbindung am Mantelrohr befestigt ist, wobei die Verbindung als Gassperre wirkt. Die als Gassperre wirkende Verbindung zwischen dem Schutzrohr-Abschnitt und dem Mantelrohr sorgt dafür, daß eine ständige Gasströmung, und sei sie auch nur klein, durch den Bereich zwischen dem Mantelrohr und dem Schutzrohr-Abschnitt nicht entstehen kann.

Im allgemeinen wird man einen Kompensator in der Nähe eines Bereichs des Schutzrohrs anordnen, in welchem Längenänderungen des Schutzrohr-Abschnitts in unterschiedliche Richtungen verlaufen. Solche Längenänderungen in unterschiedliche Richtungen gibt es im Bereich von T-Stücken und Krümmungen. Ohne den elastischen Metallbalg muß man in diesen kritischen Bereichen relativ nah beieinander zwei Stoßfugen vorsehen, um den Längenänderungen der Rohrabschnitte in zwei verschiedene Richtungen Rechnung zu tragen. Die Erfahrung zeigte, daß in diesem Fall bei bekannten Heißgasleitungen in solchen Bereichen bevorzugt störende "hot spots" auftraten. Durch die erfindungsgemäße Ausrüstung des Schutzrohr-Abschnitts in einem solchen kritischen Bereich mit mindestens einem Metallbalg-Kompensator wird die Anzahl der Stoßfugen reduziert und gleichzeitig verhindert die Gassperre, daß ständig heißes Gas bis zur Innenseite des Mantelrohrs strömen kann.

Da die erfindungsgemäße Ausbildung des Schutzrohrs das Mantelrohr wirksam schützt, kann das Mantelrohr kostengünstig aus relativ einfachem Stahl, z.B. Kohlenstoff-Stahl, hergestellt werden. Die Schutzrohr-Abschnitte und die Metallbälge werden vorzugsweise aus legiertem Stahl (z.B. Alloy 800) hergestellt. Bei der thermisch isolierenden Schutzmasse handelt es sich zumeist um handelsübliche Stampfmassen mit einer gewissen Porosität.

Ausgestaltungsmöglichkeiten der Heißgasleitung werden mit Hilfe der Zeichnung erläutert. Es zeigt:
- Fig. 1: in schematischer Darstellung zwei Reaktoren mit Heißgasleitungen und
- Fig. 2: ein T-Stück einer Heißgasleitung mit Meßstutzen im Längsschnitt.

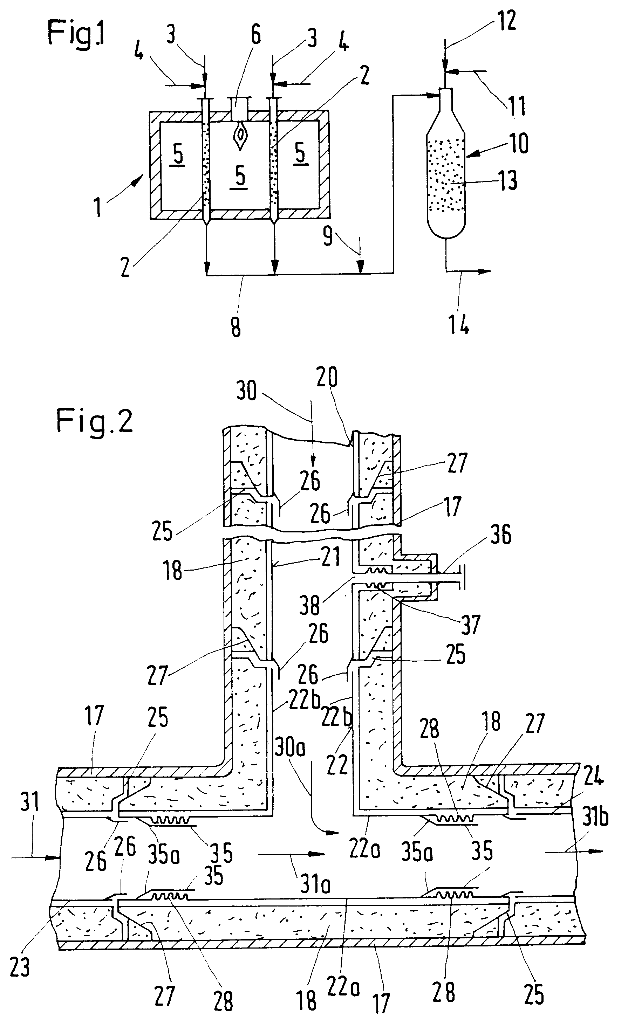

Fig. 1 zeigt eine von vielen Möglichkeiten der Verwendung von Heißgasleitungen. In einem Röhrenofen (1), der zahlreiche, mit körnigem Katalysator (z.B. Nickelkatalysator) gefüllte Röhren (2) aufweist, wird Erdgas aus der Leitung (3) zusammen mit Wasserdampf aus der Leitung (4) zu einem rohen Synthesegas bei Temperaturen im Bereich von 700 bis 1000°C umgesetzt. Die Röhren (2) befinden sich in einem von heißem Verbrennungsgas durchströmten Feuerraum (5), der zahlreiche Brenner (6) aufweist, von denen in Fig. 1 nur einer dargestellt ist. Den Brennern (6) führt man in nicht dargestellter, an sich bekannter Weise Brennstoff, z.B. Erdgas, und Luft zu.

In den Röhren (2) entsteht ein heißes Produktgas, das reich an Wasserstoff und Kohlenmonoxid ist. Dieses Produktgas wird gesammelt und durch eine erste Heißgasleitung (8) zusammen mit weiterem Erdgas aus der Leitung (9) einem autothermen Spaltreaktor (10) zugeführt. Die Umsetzung im Reaktor (10) erfolgt unter Zugabe von Sauerstoff durch die Leitung (11) und Wasserdampf durch die Leitung (12) an einer Schüttung (13) eines körnigen Katalysators, bei dem es sich ebenfalls um einen Nickelkatalysator handeln kann. Das heiße Produktgas, das eine Temperatur im Bereich von 800 bis 1300°C aufweist, wird in der zweiten Heißgasleitung (14) abgezogen. Bei diesem Produktgas handelt es sich um ein rohes Synthesegas, das üblicherweise zu mindestens 60 Vol.-% aus H₂ + CO besteht und z.B. für die Verwendung in einer Ammoniak- oder Methanolsynthese weiterverarbeitet wird. Abweichend von Fig. 1 kann man rohe Synthesegase durch Vergasung kohlenstoffhaltiger Materialien in bekannter Weise auch ohne Verwendung eines Katalysators erzeugen.

Einzelheiten der Heißgasleitungen (8) oder (14) werden mit Hilfe der Fig. 2 erläutert. Sie zeigt den besonders kritischen Bereich des Zusammentreffens zweier Leitungen (T-Stück). Die Hauptteile der Heißgasleitung sind das Mantelrohr (17), die thermisch isolierende Schutzmasse (18) und das sich aus mehreren Abschnitten (20), (21), (22), (23) und (24) ergebende Schutzrohr. Der Schutzrohr-Abschnitt (22) ist als T-Stück mit einem horizontalen Rohrstück (22a) und einem vertikalen Rohrstück (22b) ausgebildet. Zwischen den Abschnitten besteht ein Abstand in Form einer Stoßfuge (25). Im Bereich der Stoßfugen (25) gibt es jeweils ein die Enden der Rohrabschnitte überdeckendes Rohrstück (26) und einen konischen Metallring (27). Dieser Metallring (27) ist mit einem Rohrabschnitt und auch mit dem Mantelrohr (17) verbunden, z.B. durch Verschweißen, so daß er für den Bereich zwischen dem Schutzrohr und dem Mantelrohr als Gassperre dient.

Im Schutzrohr-Abschnitt (21) ist ein Meßstutzen (36) vorgesehen, der einerseits mit dem Schutzrohr und andererseits mit dem Mantelrohr (17) verbunden ist. Ein Stück dieses Meßstutzens ist als Kompensator (37) ausgebildet, der Längenänderungen aufgrund von Temperaturänderungen aufnimmt. Ohne diesen Kompensator (37) müßte man eine offene Stoßfuge vorsehen, was das Einströmen von heißem Gas bis zur Innenseite des Mantelrohrs erlauben würde, was nun aber an dieser Stelle vermieden wird.

Der Schutzrohr-Abschnitt (22), der als T-Stück ausgebildet ist, weist im horizontalen Rohrstück (22a) zwei Kompensatoren (28) auf, die jeweils als ringförmiger Metallbalg ausgebildet sind. Die beiden Kompensatoren (28) nehmen die durch Temperaturänderung hervorgerufene Längenänderung des horizontalen Teils (22a) des Schutzrohr-Abschnitts (22) auf. Die beiden Enden dieses horizontalen Rohrteils (22a) sind durch Metallringe (27) fest mit dem Mantelrohr (17) verbunden. Der vertikale Teil (22b) des Rohrabschnitts (22) kann sich bei Längenänderungen mit seinem freien Ende in die dort vorhandene Stoßfuge (25) hinein bewegen.

Wie aus der Zeichnung hervorgeht, kann das in Richtung der Pfeile (30), (30a), (31), (31a) und (31b) strömende heiße Gas in geringer Menge in die Stoßfugen (25) eindringen und dabei etwa bis zur Innenseite des Mantelrohrs (17) gelangen. Der zu einem Schutzrohr-Abschnitt gehörende konische Verbindungsring (27) verhindert aber, daß ständig heißes Gas nachströmen kann, weil dieser Ring als Gassperre dient. Die geringe Menge an heißem Gas in der Stoßfuge (25) gibt ihre Wärme an das Mantelrohr und damit nach außen ab, so daß ein stehendes gekühltes Gaspolster entsteht, welches das Zuströmen von weiterem heißem Gas in den Bereich der Stoßfuge weitgehend verhindert. Damit bleibt die Wirkung dieses Gases auf das Mantelrohr vernachlässigbar klein. Zusätzlich kann man in die Stoßfugen (25) eine elastische Füllung z.B. aus Keramikfasern einbringen, was in der Zeichnung der besseren Übersichtlichkeit wegen weggelassen wurde.

Zur Verringerung des Druckverlustes des strömenden Gases werden die Kompensatoren (28) von einem glattflächigen Leitrohr (35) überdeckt, dessen aufgebogener Rand (35a) mit dem Schutzrohr-Abschnitt (22a) verschweißt ist.

## Patentansprüche

1. Heißgasleitung zum Ableiten eines Wasserstoff und Kohlenmonoxid enthaltenden Produktgases, das aus der Umsetzung gasförmiger, flüssiger oder fester Brennstoffe stammt und Temperaturen im Bereich von 600 bis 1500°C aufweist, wobei die Heißgasleitung ein äußeres Mantelrohr, ein inneres, in Abschnitte unterteiltes Schutzrohr und zwischen dem Schutzrohr und dem Mantelrohr eine Schutzschicht aus thermisch isolierender Schutzmasse aufweist, dadurch gekennzeichnet, daß mindestens ein Abschnitt des Schutzrohrs einen als Metallbalg ausgebildeten Kompensator aufweist, der die Längenänderung des Schutzrohr-Abschnittes aufnimmt.

2. Heißgasleitung nach Anspruch 1, dadurch gekennzeichnet, daß der Metallbalg in der Nähe eines Bereichs des Schutzrohrs angeordnet ist, in welchem Längenänderungen des Schutzrohr-Abschnitts in unterschiedliche Richtungen verlaufen.

3. Heißgasleitung nach Anspruch 1 oder 2, dadurch gekennzeichnet, daß der mit einem Kompensator versehene Schutzrohr-Abschnitt durch mindestens eine ringförmige Verbindung am Mantelrohr befestigt ist, wobei die Verbindung als Gassperre wirkt.

4. Heißgasleitung nach einem der Ansprüche 1 bis 3, dadurch gekennzeichnet, daß der Schutzrohr-Abschnitt ein den Metallbalg überdeckendes Leitrohr aufweist.
